# EUROPÄISCHE PATENTANMELDUNG

(11) **EP 4 156 461 A1**
(43) Veröffentlichungstag der Anmeldung: **29.03.2023**
(21) Anmeldenummer: 22192168.7
(22) Anmeldetag: 25.08.2022
(51) Int. Cl.: H02K 1/14, H02K 15/02

(54) **BLDC-MOTOR UND VERFAHREN ZUR HERSTELLUNG EINER STATORBAUGRUPPE DES BLDC-MOTORS**

(30) Priorität: 24.09.2021 DE 102021124743
(71) Anmelder: Hanning Elektro-Werke GmbH & Co. KG, 33813 Oerlinghausen (DE)
(72) Erfinder: Kubiak, Raphael Tobias, 32760 Detmold (DE); Heißenberg, Stefan, 33607 Bielefeld (DE); Dück, Waldemar, 33332 Gütersloh (DE); Gützlaff, Tarik, 32832 Augustdorf (DE)
(74) Vertreter: Wickord, Wiro

(57) **Zusammenfassung**

Die Erfindung betrifft einen dreiphasigen BLDC-Motor umfassend eine Rotorbaugruppe (2) mit einer in eine Axialrichtung (5) längserstreckten Motorwelle (3) und mit einem an der Motorwelle (3) montierten Permanentmagnetrotor (4) mit einem mehr als zweipoligen Permanentmagneten und umfassend eine Statorbaugruppe (1) mit einem Blechstator, mit einer Mehrzahl von Spulenkörpern (12) und mit einer Mehrzahl von Wicklungen (13), die die Spulenkörper (12) umgreifen, wobei der Blechstator segmentiert ausgebildet ist und die Statorbaugruppe (1) eine Mehrzahl von Statorsegmenten (11) vorsieht, welche in eine Umfangsrichtung (7) aneinander angesetzt sind und welche jeweils einen Teil eines Statorjochs und einen Statorzahn (14) mit einem Polschuh (15) bereitstellen, wobei jeder Statorzahn (14) einen der Spulenkörper (12) mit einer Wicklung (13) trägt, wobei jedes Statorsegment (11) in die Axialrichtung (5) gestapelte Statorbleche vorsieht und wobei an jedem Statorsegment (11) eine Verbindungskontur vorgesehen ist, die eingerichtet ist zum formschlüssigen Verbinden benachbarter Statorsegmente (11). Ferner betrifft die Erfindung ein Verfahren zur Herstellung der Statorbaugruppe (1) des BLDC-Motors und die Verwendung des BLDC-Motors zum Antreiben einer Fluidpumpe in einem wasserführenden Haushaltsgerät.

## Beschreibung

Die Erfindung betrifft einen dreiphasigen BLDC-Motor umfassend eine Rotorbaugruppe mit einer Motorwelle und mit einem an der Motorwelle montierten Permanentmagnetrotor, wobei der Permanentmagnetrotor einen mehr als zweipoligen Permanentmagneten vorsieht, und umfassend eine Statorbaugruppe mit einem Blechstator, mit einer Mehrzahl von Spulenkörpern und mit einer Mehrzahl von Wicklungen, die die Spulenkörper umgreifen. Ferner betrifft die Erfindung ein Verfahren zur Herstellung der Statorbaugruppe des BLDC-Motors und die Verwendung des BLDC-Motors in einem wasserführenden Haushaltsgerät.

Aus dem Stand der Technik ist bekannt, gattungsgemäße BLDC-Motoren mit einem ringförmigen, in eine Umfangsrichtung einstückig ausgebildeten Blechstator zu realisieren. Der Blechstator sieht in Richtung eines Mittelpunkts desselben abragende Statorzähne und die Statorzähne umgreifende Spulenkörper vor, die beispielsweise um die Statorzähne gespritzt und nach dem Spritzen bewickelt werden. Die Wicklungen werden dabei aufgrund der Bauraumrestriktionen mithilfe der Nadelwickeltechnik hergestellt. Die Nadelwickeltechnik ist ein vergleichsweise langsames und damit kostenintensives Wicklungsverfahren, bei dem zugleich hohe dynamische Kräfte auftreten.

Zudem ist bekannt, die Statorbaugruppe eines gattungsgemäßen BLDC-Motors aus einzelnen Statorsegmenten herzustellen. Die einzelnen Statorsegmente sehen typischerweise jeweils einen Spulenkörper und eine Wicklung vor. Die Spulenkörper werden dabei vor dem Verbinden beziehungsweise Fügen der Statorsegmente bewickelt. Die Wicklungen können dann mit der sogenannten Linearwickeltechnik kostengünstig hergestellt werden. Das Fügen der Statorsegmente ist jedoch vergleichsweise aufwendig. Es erfolgt beispielsweise formschlüssig, indem die einzelnen Statorsegmente axial miteinander verbunden werden. Darüber hinaus kann eine radiale Montage erfolgen. Im Rahmen der radialen Montage ist zwischen den Statorsegmenten selbst kein Formschluss ausgebildet. Die Fixierung beziehungsweise Verbindung der Statorsegmente erfolgt bevorzugt stoffschlüssig, beispielsweise durch ein Laser- oder WIG-Schweißverfahren. Um die Statorsegmente vor dem Verbinden in Position zu halten, können die Statorsegmente umgreifende Halteringe oder andere Hilfsmittel beziehungsweise Werkzeuge eingesetzt werden.

Aufgabe der vorliegenden Erfindung ist es, einen einfach und kostengünstig zu fertigenden BLDC-Motor sowie ein Herstellverfahren hierfür anzugeben.

Zur Lösung der Aufgabe weist die Erfindung die Merkmale des Patentanspruchs 1 und des Patentanspruchs 12 auf. Weitere vorteilhafte Ausführungsformen der Erfindung ergeben sich aus den Unteransprüchen.

Der erfindungsgemäße dreiphasige BLDC-Motor sieht in einer bevorzugten Ausführungsform einen Ringmagneten als Permanentmagnet vor. Beispielsweise ist der Permanentmagnet vierpolig oder achtpolig ausgebildet.

Bei dem dreiphasigen BLDC-Motor mit einem vierpoligen oder achtpoligen Permanentmagnet bilden bevorzugt sechs Statorsegmente mit jeweils einem Statorzahn, mit jeweils einem Polschuh, mit jeweils einem den Statorzahn umgreifenden Spulenkörper und mit jeweils einer Wicklung je Spulenkörper die Statorbaugruppe.

Die Wicklungen können bevorzugt als Kupferdrahtwicklung oder alternativ als Aluminiumdrahtwicklung ausgeführt sein. Der Spulenkörper kann beispielsweise um den Statorzahn herumgespritzt werden.

Nach der Erfindung wird der Blechstator aus in die Axialrichtung gestapelten Statorblechen hergestellt.

Alle Statorsegmente und/oder alle Statorbleche können zur Realisierung einer besonders kostengünstigen Ausführungsform des BLDC-Motors identisch ausgebildet sein.

Nach einer Weiterbildung der Erfindung ist eine axiale Länge des Permanentmagneten um wenigstens 5 mm größer als eine in die Axialrichtung bestimmte Höhe der Statorzähne. Bevorzugt hat der Permanentmagnet eine axiale Länge von maximal 18 mm und besonders bevorzugt von 15 mm oder weniger.

Eine kostenmäßig besonders favorisierte Ausführungsform des erfindungsgemäßen BLDC-Motors sieht einen Permanentmagneten mit einer axialen Länge von 13 mm und Statorzähne mit einer Höhe von 8 mm vor. Es ergibt sich dann ein Verhältnis der axialen Länge des Permanentmagneten zu der Höhe der Statorzähne von 1,625.

Bei anderen Abmessungen der axialen Länge des Permanentmagneten und/oder der Höhe der Statorzähne kann das Verhältnis im Bereich zwischen 1,6 bis 2,3 liegen.

Sofern die Wicklungen als Kupferdrahtwicklungen ausgeführt sind, ergeben sich vorteilhaft günstige Ausführungsformen des BLDC-Motors bei einem Verhältnis des Gewichts des Kupferdrahts aller Kupferdrahtwicklungen zu dem Gewicht des Blechstators von 0,525 bis 0,675 und bevorzugt von 0,58 bis 0,63. Das Gewicht aller Kupferdrahtwicklungen beträgt bevorzugt 30 g ± 2 g. Das Gewicht des Blechstators liegt im Bereich von 46,5 g bis 53 g.

Da bei einer kostenoptimierten Gestaltung des Blechstators neben der Blechmenge beziehungsweise dem Gewicht auch die Verteilung eine große Rolle spielt, wurden auch hier umfangreiche Untersuchungen angestrengt. Dabei hat sich gezeigt, dass eine Zahnbreite des Statorzahns wenigstens einer Jochbreite des Statorjochs entsprechen sollte. Beispielsweise können der Statorzahn und das Statorjoch gleich breit ausgebildet sein. Vorteile ergeben sich hier insbesondere bei der Parkettierung der Statorbleche mit der Folge, dass die Statorbleche kostengünstig hergestellt werden können und die Motorkosten insgesamt sinken.

Ein Außenradius des Permanentmagnetrotors beziehungsweise des Ringmagneten beträgt vorzugsweise 10,5 mm ± 1 mm.

Ein Außenradius des Blechstators beträgt vorzugsweise 29 mm ± 2 mm.

Nach einer Weiterbildung der Erfindung beträgt ein Verhältnis eines Außenradius des Permanentmagnetrotors beziehungsweise des den Außenradius des Permanentmagnetrotors maßgeblich bestimmenden Ringmagneten zu einem Außenradius des Blechstators wenigstens 0,35 und bevorzugt 0,36 oder mehr. Besonders bevorzugt ist ein Verhältnis von 0,362, welches sich bei einem Außenradius des Permanentmagnetrotors beziehungsweise des Ringmagneten von 10,5 mm und einem Außenradius des Blechstators von 29 mm ergibt.

Eine Polabdeckung des dreiphasigen BLDC-Motors mit dem vierpoligen Permanentmagnet entspricht vorteilhaft 0,8 ± 0,05. Sie ist definiert als das Verhältnis eines Polwinkels der Polschuhe zu einem Teilungswinkel des Blechstators beziehungsweise der Statorbaugruppe, der bei der Verwendung von sechs identischen Statorsegmenten 60° beträgt.

Nach einer Weiterbildung der Erfindung sehen die Statorsegmente senkrecht zu der Radialrichtung eine jedenfalls abschnittsweise ebene, tangential zu der Umfangsrichtung orientierte Flanschfläche vor. Ein Verhältnis eines minimalen radialen Abstands der Flanschfläche zu dem Außenradius des Permanentmagnetrotors beziehungsweise des Ringmagneten beträgt wenigstens 0,365 und bevorzugt 0,385 oder mehr.

Der minimale radiale Abstand der Flanschfläche beträgt bevorzugt 26,25 mm ± 0,5 mm.

Nach einer Weiterbildung der Erfindung ist für den Spulenkörper eine Flanschwandstärke von 0,8 mm ± 0,2 mm und eine Mittenwandstärke von 0,8 mm ± 0,2 mm realisiert. Eine in die Radialrichtung bestimmte Spulenhöhe der Wicklung beträgt bevorzugt 6,7 mm ± 0,2 mm. Senkrecht hierzu bestimmt ist die Spulenbreite. Sie liegt bevorzugt im Bereich von 3,9 mm ± 0,1 mm.

Ein Luftspaltmaß zwischen einer der Rotorbaugruppe zugewandten gekrümmten Oberfläche der Polschuhe und dem Permanentmagnetrotor ist anwendungsabhängig so bestimmt, dass bei einem nasslaufenden Permanentmagnetrotor eine Wandung eines Spaltrohrtopfs zwischen dem Polschuh und dem Permanentmagnetrotor vorgesehen werden kann. Das Luftspaltmaß beträgt dann beispielsweise 1,3 mm ± 0,1 mm.

Nach der Erfindung ist an jedem Statorsegment eine Verbindungskontur vorgesehen. Bevorzugt ist die Verbindungskontur eingerichtet zum formschlüssigen Verbinden eines Statorsegments mit einem benachbarten Statorsegment. Die formschlüssige Verbindung der Statorsegmente wird beispielsweise realisiert, indem die Verbindungskontur einmal durch eine nasenförmige Ausformung und einmal durch eine korrespondierend zu der nasenförmigen Ausformung geformte Aufnahmenut gebildet ist, in die die nasenförmige Ausformung eingreift.

Nach einer Weiterbildung der Erfindung sieht jedes Statorsegment zwei Verbindungskonturen vor, welche an zwei einander gegenüberliegenden freien Enden eines Jochabschnitts des Statorsegments vorgesehen sind. Bevorzugt sieht jedes Statorsegment einmal eine nasenförmige Ausformung an einem ersten freien Ende des Jochabschnitts und einmal eine Aufnahmenut an einem dem ersten freien Ende gegenüberliegenden zweiten freien Ende des Jochabschnitts vor.

Nach einer Weiterbildung der Erfindung sind eine Geometrie der Verbindungskonturen beziehungsweise der nasenförmigen Ausformung und der Aufnahmenut bezogen auf eine senkrecht zu der Axialrichtung definierte Querschnittsebene der Statorbaugruppe so aufeinander abgestimmt, dass beim gleichzeitigen und synchronen radialen Fügen aller Statorsegmente die Verbindungskonturen benachbarter Statorsegmente kollisionsfrei ineinander beziehungsweise die nasenförmigen Ausformungen der Statorsegmente kollisionsfrei in die Aufnahmenuten der benachbarten Statorsegmente eingesetzt werden. Im gefügten Zustand ist dann ein radiales Entfernen eines einzelnen Statorsegments aus der gefügten Statorbaugruppe aufgrund einer Hinterschneidung, die die Verbindungskonturen benachbarter Statorsegmente beziehungsweise die Aufnahmenuten und die hierein eingreifenden nasenförmigen Ausformungen ausbilden, nicht möglich. Es ergibt sich insofern beim radialen Fügen der Statorsegmente aufgrund der speziellen Geometrie der Verbindungskonturen ein Formschluss. Ein Auflösen des Formschlusses ist nur möglich, wenn die einzelnen Statorsegmente in Umkehrung des Fügeprozesses gleichzeitig und synchron radial nach außen bewegt werden. Das radiale Entfernen eines einzigen Statorsegments ist demgegenüber blockiert. Vorteilhaft ergibt sich hierdurch eine kostengünstige Möglichkeit der Fertigung der erfindungsgemäßen Statorbaugruppe. Es kann auf das deutlich aufwendigere sequentielle axiale Verbinden der Statorsegmente zur Herstellung einer formschlüssigen Verbindung derselben verzichtet werden.

Um die erfindungsgemäße Herstellung der Statorbaugruppe zu realisieren, werden die Statorsegmente zunächst in Umfangsrichtung verteilt und in die Umfangsrichtung beabstandet zueinander so positioniert, dass alle Statorsegmente in der senkrecht zu der Axialrichtung definierten Querschnittsebene angeordnet sind, dass alle Statorsegmente einen gleichen Abstand zu einem Mittelpunkt aufweisen und dass die Statorzähne auf den Mittelpunkt ausgerichtet sind. Dann werden die Statorsegmente gleichzeitig und synchron, das heißt mit einem stets gleichen Abstand zum Mittelpunkt beziehungsweise mit einer gleichen Geschwindigkeit radial auf den Mittelpunkt zubewegt. Hierbei werden die nasenförmigen Ausformungen kollisionsfrei in die Aufnahmenuten beziehungsweise einander zugewandte Verbindungskonturen benachbarter Statorsegmente ineinander eingesetzt und benachbarte Statorsegmente, welche aneinander anliegen, formschlüssig verbunden. Die Statorsegmente behalten bei der radialen Fügebewegung in Richtung des Mittelpunkts ihre Ausrichtung beziehungsweise Orientierung zum Mittelpunkt.

Vorzugsweise erfolgt die einleitende Anordnung beziehungsweise Ausrichtung der Statorsegmente in Bezug auf die Umfangsrichtung symmetrisch, das heißt die Statorsegmente werden in Bezug auf die Umfangsrichtung radial gleich verteilt angeordnet.

Nach einer alternativen Ausführungsform der Erfindung ist die Geometrie der nasenförmigen Ausformung und der Aufnahmenut bezogen auf die senkrecht zu der Axialrichtung definierte Querschnittsebene der Statorbaugruppe derart aufeinander abgestimmt, dass die nasenförmigen Ausformungen auf Übermaß gefertigt sind und sich bei einem gleichzeitigen und synchronen radialen Fügen aller Statorsegmente unter Aufbringung einer Montagekraft in die Aufnahmenuten einsetzen lassen und dass ein radiales Entfernen eines einzelnen Statorsegments aus der gefügten Statorbaugruppe aufgrund einer Hinterschneidung, die die Aufnahmenuten und die hierein eingreifenden nasenförmigen Ausformungen bilden, blockiert ist. Vorteilhaft verbessert sich die mechanische Stabilität der Statorbaugruppe durch das Vorsehen der auf Übermaß gefertigten nasenförmigen Ausnehmungen.

Die Montagekraft wird insbesondere radial und dient der Überwindung der durch das Übermaß der Ausformungen gegenüber den Aufnahmenuten auftretenden Montagewiderstände. Insbesondere kann die Geometrie von Ausformungen und Aufnahmenuten so aufeinander abstimmt sein, dass das Übermaß lediglich lokal beziehungsweise abschnittsweise ausgebildet ist und/oder in gefügten Zustand der Statorbaugruppe ein Hinterschnitt vorgesehen ist.

Ein Übermaß von weniger als fünf hundertstel bis gut einem zehntel Millimeter ist hierbei in der Praxis ausreichend, um die mechanische Stabilität signifikant zu verbessern. Zugleich ist in diesem Bereich die Montagefähigkeit der Statorbaugruppe infolge der üblichen Fertigungstoleranzen, der Elastizität und des Spiels zwischen den zu fügenden Statorsegmenten gegeben.

Nach einer Weiterbildung der Erfindung werden Statorsegmente im Bereich der Verbindungskonturen jedenfalls abschnittsweise verformt, um einen lokalen Formschluss erstmalig herzustellen oder zu verstärken. Die Verformung erfolgt bevorzugt, nachdem die Verbindungskonturen der Statorsegmente ineinander eingesetzt worden sind und bevorzugt durch ein Anstemmen, insbesondere ein axiales Anstemmen der nasenförmigen Ausformungen jedes Statorsegments.

Der erfindungsgemäße BLDC-Motor dient beispielsweise als Antrieb für eine elektrische Fluidpumpe. Die mit dem erfindungsgemäßen BLDC-Motor angetriebene Fluidpumpe wird beispielsweise im Bereich der Haustechnik, insbesondere als Heizungspumpe und bevorzugt in einem wasserführenden Haushaltsgerät, insbesondere einer Waschmaschine, einer Spülmaschine oder einem Gargerät verwendet.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details des BLDC-Motors gelten selbstverständlich auch im Zusammenhang mit dem Herstellverfahren und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung. Sie haben keinen einschränkenden Charakter.

Es zeigen:
- Fig. 1: eine Stirnseitenansicht eines erfindungsgemäßen BLDC-Motors mit einer Statorbaugruppe und einer koaxial zu dieser angeordneten Rotorbaugruppe,
- Fig. 2: eine Mehrzahl von Statorsegmenten der Statorbaugruppe des BLDC-Motors nach Fig. 1, welche vor dem Fügen der Statorbaugruppe in eine Umfangsrichtung verteilt und in die Umfangsrichtung beabstandet zueinander positioniert sind,
- Fig. 3: eine Teilansicht eines Statorsegments ohne Wicklung,
- Fig. 4: eine Aufsicht auf ein Statorblech eines Statorsegments in einer ersten Ausführungsform,
- Fig. 5: eine Aufsicht auf ein Statorblech eines Statorsegments in einer zweiten Ausführungsform,
- Fig. 6: eine Prinzipdarstellung eines ersten Schritts eines Fügeprozesses für die Statorbaugruppe,
- Fig. 7: eine Prinzipdarstellung eines zweiten Schritts des Fügeprozesses für die Statorbaugruppe,
- Fig. 8: eine Prinzipdarstellung eines dritten Schritts des Fügeprozesses für die Statorbaugruppe,
- Fig. 9: eine Prinzipdarstellung eines vierten Schritts des Fügeprozesses für die Statorbaugruppe
- Fig. 10: eine vergrößerte Teilansicht von zwei Statorsegmenten beim Fügen,
- Fig. 11: eine Teilansicht des Statorsegments und die Rotorbaugruppe des erfindungsgemäßen BLDC-Motors in einer Prinzipdarstellung,
- Fig. 12: die Statorbaugruppe des BLDC-Motors nach dem Fügen,
- Fig. 13: eine Aufsicht auf eine Mehrzahl von durch Statorbleche vereinfacht dargestellten Statorsegmenten einer Statorbaugruppe in einer dritten Ausführungsform, welche vor dem Fügen der Statorbaugruppe in eine Umfangsrichtung verteilt und in die Umfangsrichtung beabstandet zueinander positioniert sind,
- Fig. 14: eine vergrößerte Teilansicht von zwei benachbarten Statorsegmenten der Statorbaugruppe nach Fig. 13 vor dem Fügen,
- Fig. 15: eine Aufsicht auf die Mehrzahl von Statorsegmenten der Statorbaugruppe nach Fig. 13 beim Fügen,
- Fig. 16: eine vergrößerte Teilansicht von zwei benachbarten Statorsegmenten der Statorbaugruppe nach Fig. 13 beim Fügen,
- Fig. 17: eine Aufsicht auf die Mehrzahl von Statorsegmenten der Statorbaugruppe nach Fig. 13 nach dem Fügen,
- Fig. 18: eine vergrößerte Teilansicht von zwei benachbarten Statorsegmenten der Statorbaugruppe nach Fig. 13 nach dem Fügen,
- Fig. 19: eine Aufsicht auf eine Mehrzahl von durch Statorbleche vereinfacht dargestellten Statorsegmenten einer Statorbaugruppe in einer vierten Ausführungsform, welche vor dem Fügen der Statorbaugruppe in eine Umfangsrichtung verteilt und in die Umfangsrichtung beabstandet zueinander positioniert sind,
- Fig. 20: das Detail U aus Fig. 19,
- Fig. 21: eine Aufsicht auf die Mehrzahl von Statorsegmenten der Statorbaugruppe nach Fig. 19 beim Fügen,
- Fig. 22: das Detail V aus Fig. 21,
- Fig. 23: eine Aufsicht auf die Mehrzahl von Statorsegmenten der Statorbaugruppe nach Fig. 19 nach dem Fügen,
- Fig. 24: das Detail W aus Fig. 23,
- Fig. 25: eine Aufsicht auf eine Mehrzahl von durch Statorbleche vereinfacht dargestellten, gefügten Statorsegmenten einer Statorbaugruppe in einer fünften Ausführungsform vor dem Anstemmen,
- Fig. 26: das Detail X aus Fig. 25,
- Fig. 27: eine perspektivische Ansicht der Mehrzahl von gefügten Statorsegmenten der Statorbaugruppe nach Fig. 25 beim Anstemmen,
- Fig. 28: das Detail Y aus Fig. 27,
- Fig. 29: eine Aufsicht auf die Mehrzahl von gefügten Statorsegmenten der Statorbaugruppe nach Fig. 25 nach dem Anstemmen und
- Fig. 30: das Detail Z aus Fig. 29.

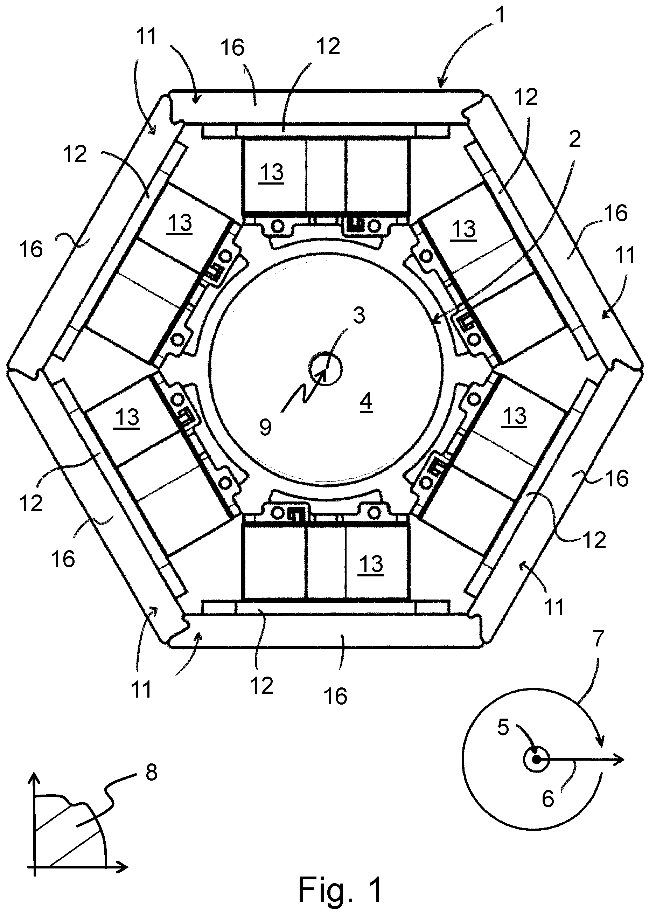

Figur 1 zeigt eine Stirnseitenansicht eines BLDC-Motors mit einer Statorbaugruppe 1 und einer koaxial zu der Statorbaugruppe 1 angeordneten Rotorbaugruppe 2.

Die Statorbaugruppe 1 umfasst einen Blechstator, eine Mehrzahl von Spulenkörpern 12 und eine Mehrzahl von Wicklungen 13, die die Spulenkörper 12 umgreifen. Der Blechstator ist segmentiert ausgebildet. Die Statorbaugruppe 1 sieht insofern eine Mehrzahl von Statorsegmenten 11 vor, welche im montierten Zustand in einer Umfangsrichtung 7 aneinander angesetzt sind und die Statorbaugruppe 1 bilden.

Jedes Statorsegment 11 sieht in einer Axialrichtung 5 gestapelte Statorbleche vor, welche einen Teil des Statorjochs (Jochabschnitt 16), einen Statorzahn 14 und einen Polschuh 15 bereitstellen. Der Spulenkörper 12 eines jeden Statorsegments 11 umgreift den Statorzahn 14. Bevorzugt sind die Spulenkörper 12 um den Statorzahn 14 gespritzt.

Die Rotorbaugruppe 2 sieht eine in die Axialrichtung 5 längserstreckte Motorwelle 3 und einen an der Motorwelle 3 montierten Permanentmagnetrotor 4 vor. Beispielsweise ist der Permanentmagnetrotor 4 fest mit der Motorwelle 3 verbunden. Die Rotorbaugruppe 2 ist koaxial zur Statorbaugruppe 1 angeordnet.

Der Permanentmagnetrotor 4 sieht einen Permanentmagneten vor, der im vorliegenden Ausführungsbeispiel des BLDC-Motors als ein vierpoliger Ringmagnet ausgebildet ist. Eine axiale Länge des Permanentmagneten ist größer als eine in die Axialrichtung 5 bestimmte Höhe der Statorzähne 14. Beispielsweise beträgt die axiale Länge des Permanentmagneten 13 mm und die in die Axialrichtung 5 bestimmte Höhe der Statorzähne 14 8 mm. Bezogen auf die Axialrichtung 5 überragt der Permanentmagnet die Statorzähne dabei bevorzugt gleichmäßig zu beiden Seiten.

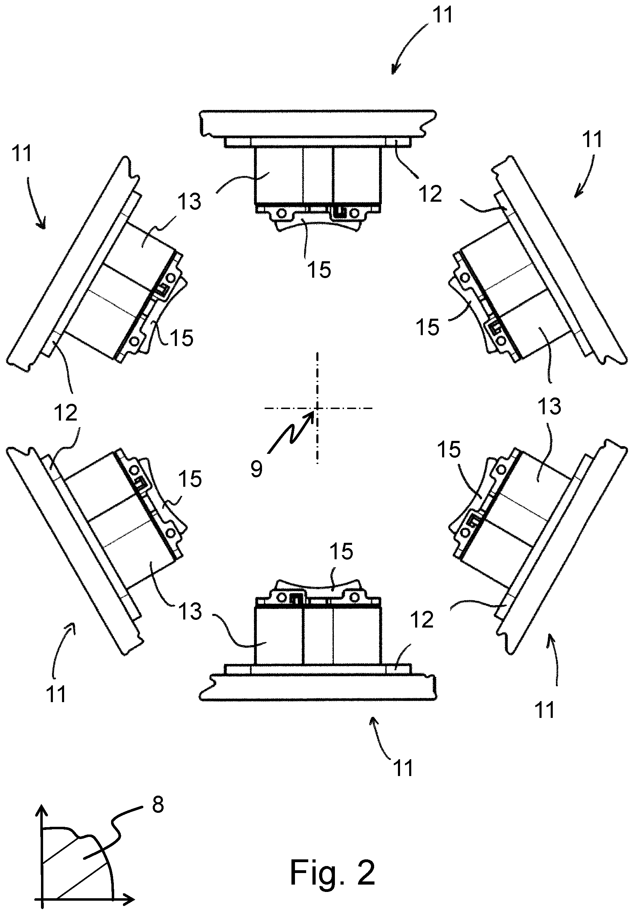

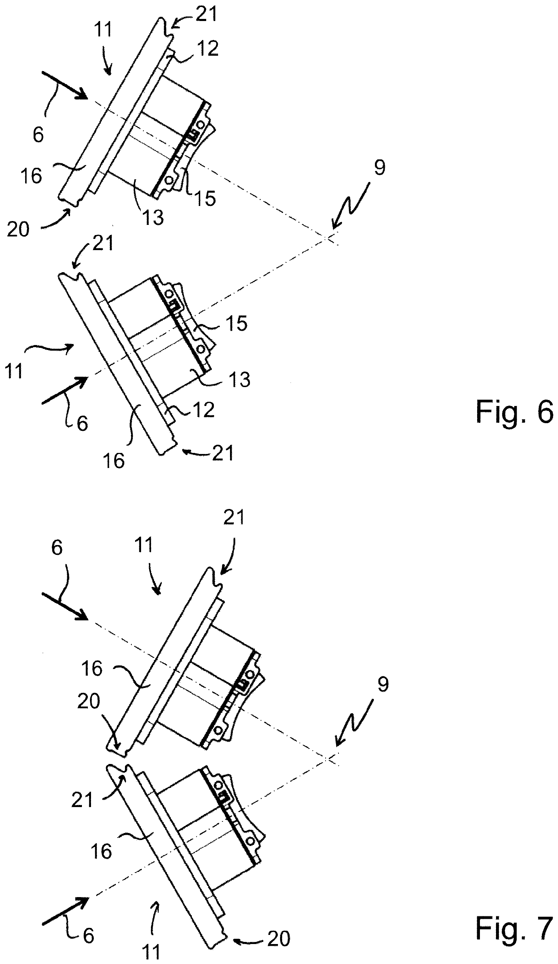

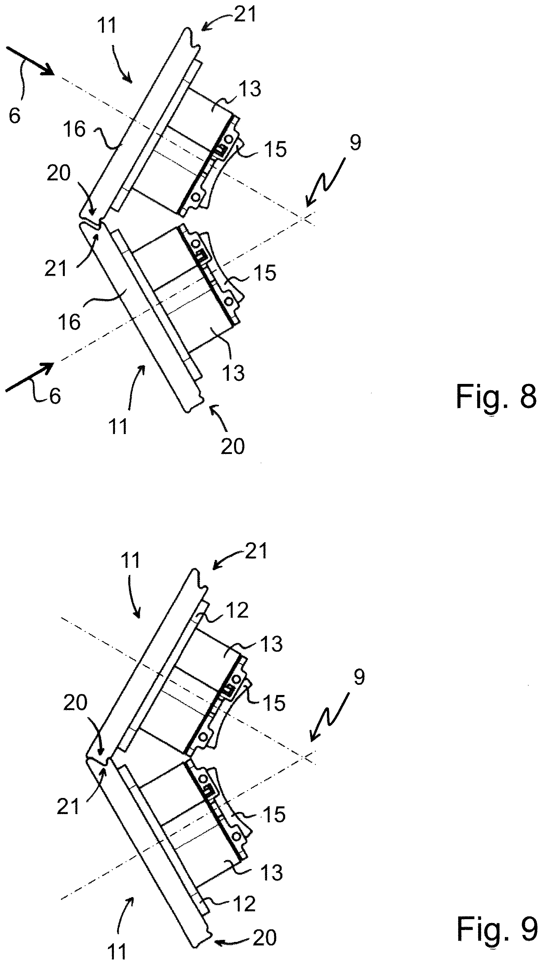

Den detaillierten Aufbau der Statorbaugruppe 1 zeigt Figur 2. Insgesamt sechs baugleiche Statorsegmente 11 werden in die Umfangsrichtung 7 aneinander angelegt und bilden dann die Statorbaugruppe 1. Das Fügeverfahren erfolgt, wie ausschnittsweise für zwei der sechs Statorsegmente 11 in den Figuren 6 bis 9 dargestellt ist, indem alle sechs Statorsegmente 11 in einer senkrecht zu der Axialrichtung 5 bestimmen Querschnittsebene 8 positioniert werden und dabei einen gleichen Abstand zu einem Mittelpunkt 9 aufweisen. Die Statorzähne 14 sind auf den Mittelpunkt 9 ausgerichtet. Die Verteilung in die Umfangsrichtung 7 erfolgt so, dass die Statorsegmente 11 zueinander beabstandet und gleich verteilt angeordnet sind.

Zum Fügen werden dann alle Statorsegmente 11 gleichzeitig und synchron radial auf den Mittelpunkt 9 zubewegt, bis an zwei aneinander gegenüberliegenden freien Enden des Jochabschnitts 16 gebildete Verbindungskonturen formschlüssig ineinandergreifen und die vormals beabstandeten benachbarten Statorsegmente 11 aneinander anliegen zur Bildung der Statorbaugruppe 1.

Die Verbindungskonturen werden zum einen durch eine nasenförmige Ausformung 20 und zum anderen durch eine korrespondierend zu der nasenförmigen Ausformung 20 geformte Aufnahmenut 21 gebildet, die die nasenförmige Ausformung 20 aufnimmt. Beim gleichzeitigen und synchronen radialen Fügen aller Statorsegmente 11 werden die nasenförmigen Ausformungen 20 kollisionsfrei in die korrespondierenden Aufnahmenuten 21 eingesetzt. Ein radiales Entfernen eines einzelnen Statorsegments 11 aus der gefügten Statorbaugruppe 1 ist aufgrund der Hinterschneidungen, die die Aufnahmenut 21 des zu entfernenden Statorsegments 11 und die hierein eingreifende nasenförmige Ausformung 20 des benachbarten Statorsegments 11 einerseits und die nasenförmige Ausformung 20 des zu entfernenden Statorsegments 11 und die Aufnahmenut 21 des benachbarten Statorsegments 11 andererseits bilden, blockiert und nicht möglich. Ein einzelnes Statorsegment 11 kann demzufolge aus der fertig montierten Statorbaugruppe 1 nicht radial entnommen werden. Stattdessen müssten alle Statorsegmente 11 synchron radial nach außen bewegt werden, um die formschlüssige Verbindung der Statorsegmente 11 im Bereich der Verbindungskonturen zu lösen. Alternativ bleibt, ein einzelnes Statorsegment 11 axial aus der Statorbaugruppe 1 herauszuschieben.

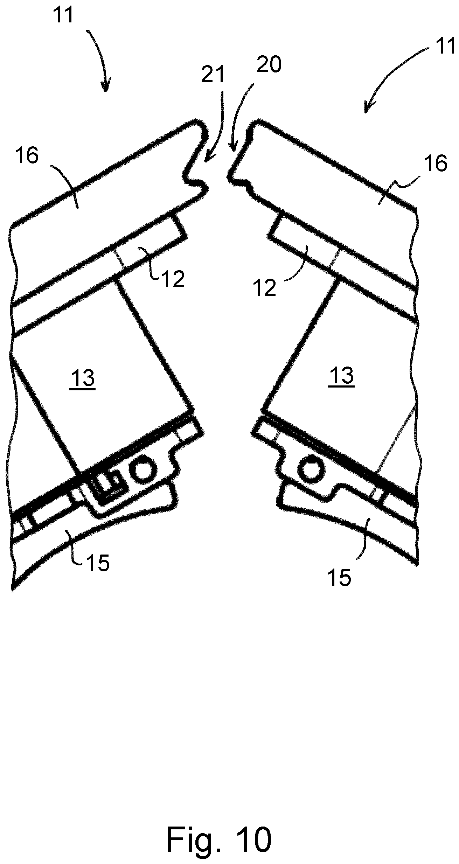

Die spezielle Geometrie der Verbindungskontur ist vergrößert noch einmal in der Figur 10 dargestellt. Hierbei wird die Nasenform der Ausformung 20 und die korrespondierende Gestalt der Aufnahmenut 21 deutlich. Die Kontur ist so gewählt, dass beim radialen Fügen infolge der Radialbewegung die freien Enden benachbarter Jochabschnitte 16 sich in Umfangsrichtung 7 annähern. Die überlagerte Radialbewegung aller Statorsegmente 11 sorgt dabei dafür, dass ein kollisionsfreies Fügen möglich wird.

Demgegenüber wäre ein sequentielles kollisionsfreies radiales Fügen der einzelnen Statorsegmente 11, wie das radiale Entnehmen eines einzigen Statorsegments 11 aus der fertig montierten Statorbaugruppe 1, aufgrund der Hinterschneidung nicht möglich.

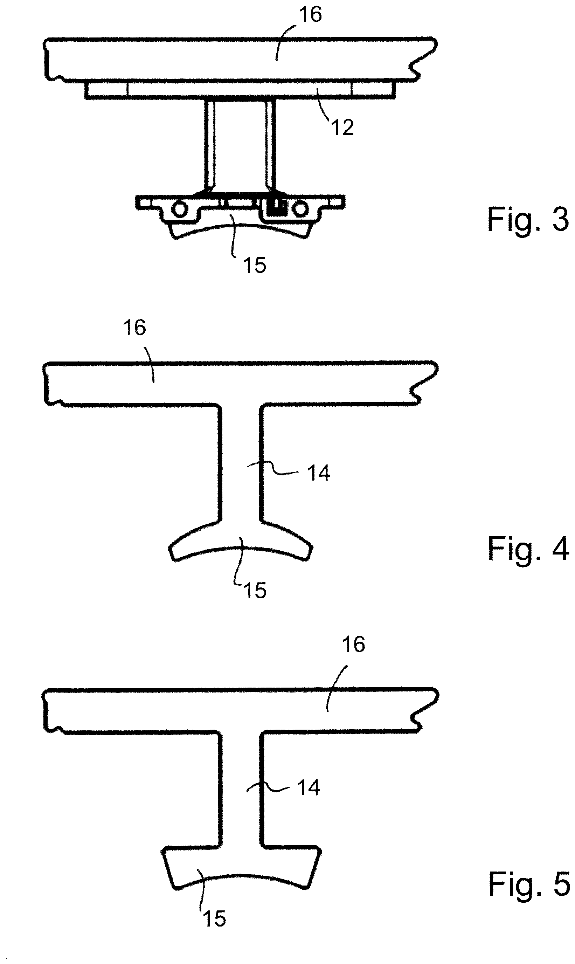

Figur 3 zeigt eine Teilansicht des Statorsegments 11. Dargestellt sind die in die Axialrichtung 5 geschichteten Statorbleche mit dem Spulenkörper 12, welche die Statorbleche im Bereich des Statorzahns 14 umgreifen. Nicht dargestellt ist die Wicklung 13 des Statorsegments 11.

Zwei alternative Ausführungsformen der Statorbleche sind in den Figuren 4 und 5 dargestellt. Fig. 4 gibt diesbezüglich eine Einzelteilansicht eines Statorblechs eines Statorsegments 11 der Statorbaugruppe 1 des BLDC-Motors nach Fig. 1 an. Fig. 5 gibt eine Einzelteilansicht eines Statorblechs in einer alternativen zweiten Ausführungsform an. Die Statorbleche nach den Fig. 4 und 5 unterscheiden sich insbesondere in Bezug auf die Geometrie der Polschuhe 15.

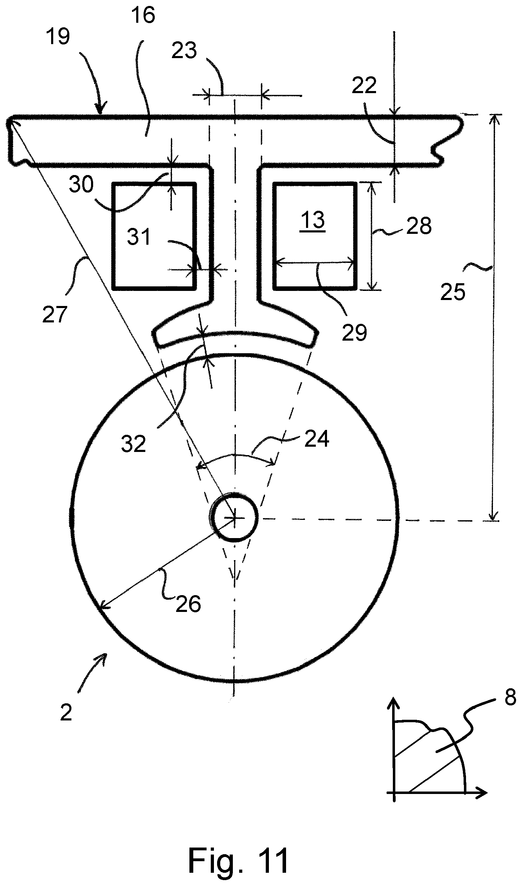

Figur 11 zeigt einige geometrische Größen des BLDC-Motors in einer Prinzipdarstellung.

Eine Jochbreite 22 und eine Zahnbreite 23 des Statorsegments 11 sind vorliegend jeweils gleich groß. Exemplarisch liegt ein Öffnungswinkel 24 der Polschuhe 15, der sich durch die gegeneinander angestellten freien Endflächen derselben definiert, bei nominell 34°.

Ein Außenradius des Permanentmagnetrotors 4, welcher im Wesentlichen dem Außenradius 26 des Ringmagneten entspricht, beträgt 10,5 mm. Ein Außenradius 27 des Blechstators beträgt 29 mm. Ein Verhältnis des Außenradius 26 des Ringmagneten beziehungsweise des Permanentmagnetrotors 4 zu dem Außenradius 27 des Blechstators liegt demzufolge bei 0,362.

Ein vom Mittelpunkt 9 der Statorbaugruppe 1 beziehungsweise der Motorwelle 3 bestimmtes radiales Abstandsmaß 25 zu einer ebenen Flanschfläche 19 der Statorsegmente 11 liegt im Bereich von 25,75 bis 26,75 mm.

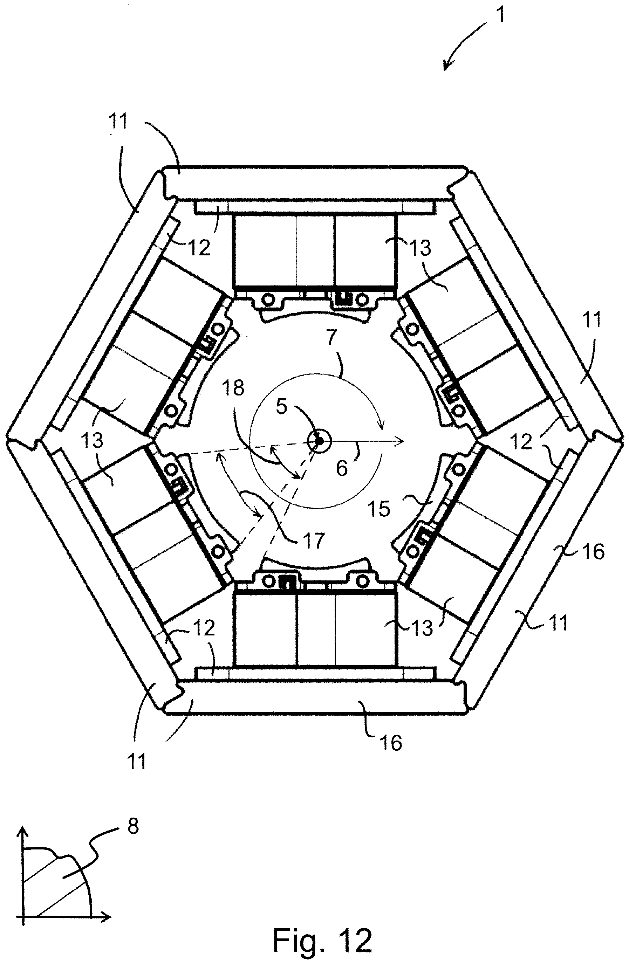

Figur 12 zeigt die fertig montierte Statorbaugruppe 1. Hier ist zu erkennen, dass der Blechstator eine Polüberdeckung von 0,8 hat. Sie definiert sich als Verhältnis eines Polwinkels 17 zu einem Teilungswinkel 18. Der Teilungswinkel 18 ist durch die sechs Statorsegmente 11 definiert und beträgt 60°. Der Polwinkel 17, welcher anders als der Öffnungswinkel 24 vom Mittelpunkt 9 ausgehend bestimmt wird, beträgt 48°.

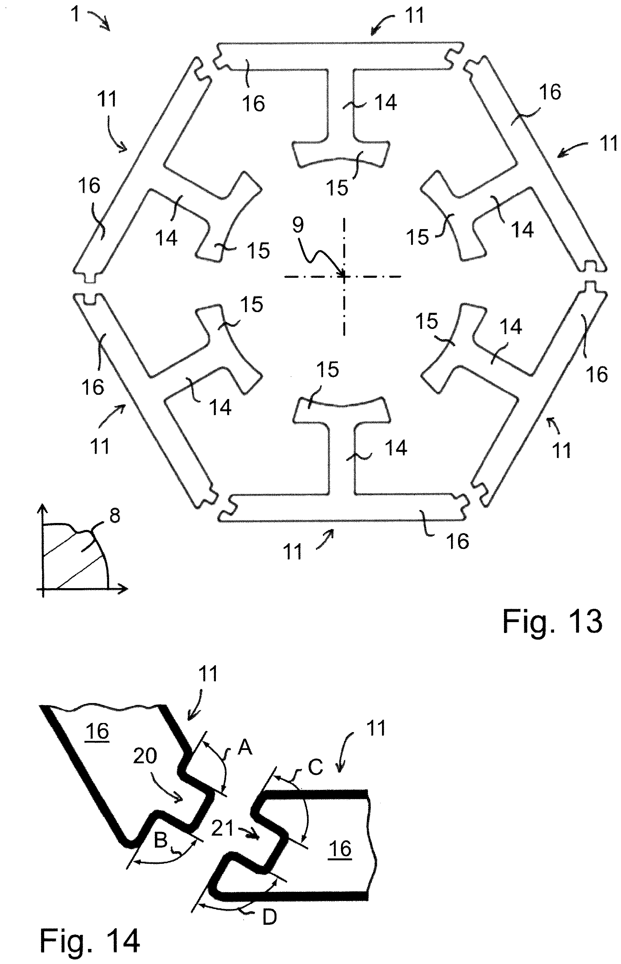

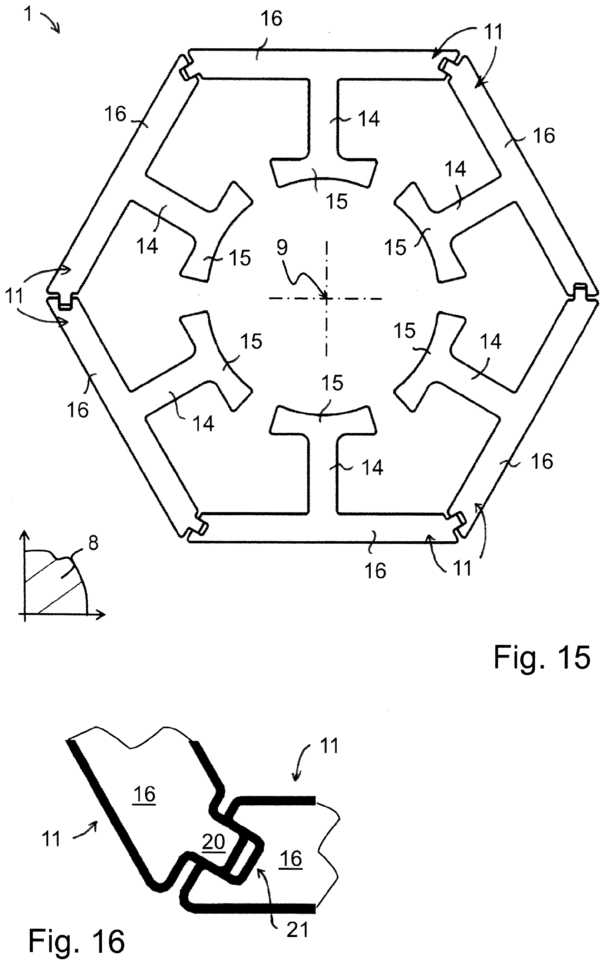

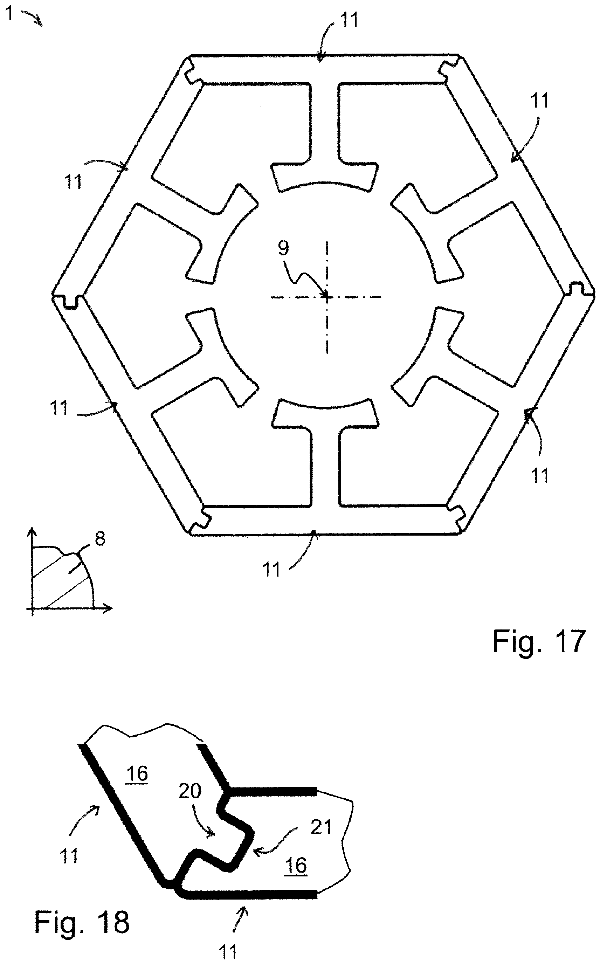

Die Fig. 13 bis 18 geben eine alternative dritte Ausführungsform für die Statorbleche der sechs identisch ausgebildeten Statorsegmente 11 der Statorbaugruppe 1 an. Die Statorbleche weisen hier wie gehabt stirnseitig jeweils an einem ersten Ende des Jochabschnitts 16 die nasenförmige Ausformung 20 und an einem gegenüberliegenden Ende des Jochabschnitts 16 die zu der nasenförmigen Ausformung 20 korrespondierend geformte Aufnahmenut 21 als Verbindungskonturen auf. Die nasenförmige Ausformung 20 der Statorbleche weist hier jeweils eine näherungsweise rechteckige Kontur auf und ragt mit rechtwinkligen Winkeln A, B mittig an einem stirnseitigen Ende des Jochabschnitts 16 ab. Die Aufnahmenut 21 weist jeweils eine korrespondierend geformte rechteckige U-förmige Kontur auf und ist mit rechtwinkligen Winkeln C, D mittig gegenüber dem restlichen Teil des stirnseitigen Endes des Jochabschnitts 16 versenkt. Kanten der Aufnahmenut 21 und der nasenförmigen Ausformung 20 sind jeweils leicht abgerundet. Diese Form der Aufnahmenuten 21 und Ausformungen der Statorbleche ermöglicht ein kollisionsbeziehungsweise hinterschneidungsfreies Ineinanderstecken beziehungsweise Fügen der Statorsegmente 11 gleichzeitig und synchron entlang der radial zum Mittelpunkt 9 hinführenden Fügebewegung.

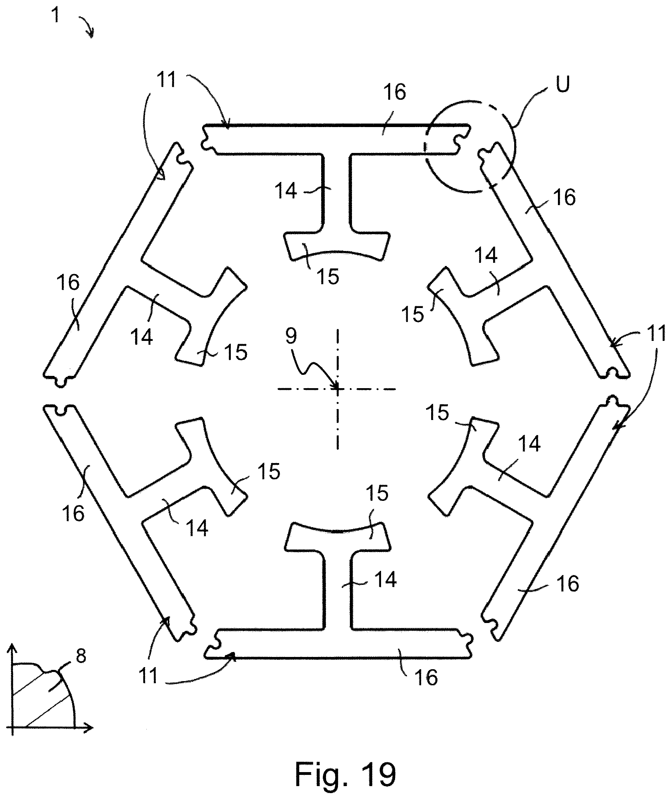

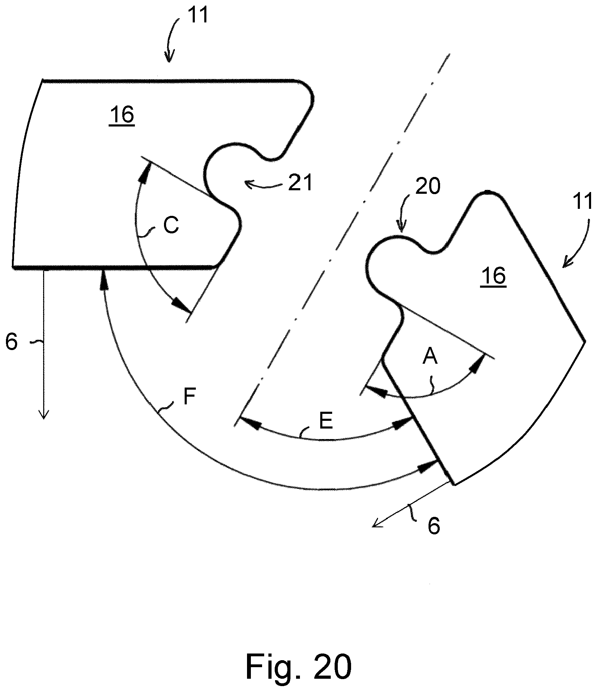

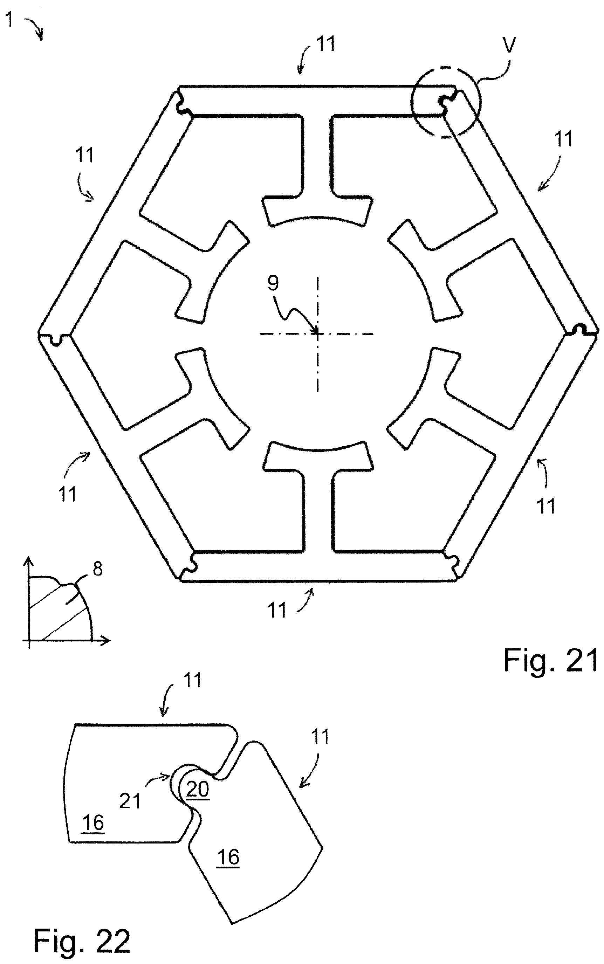

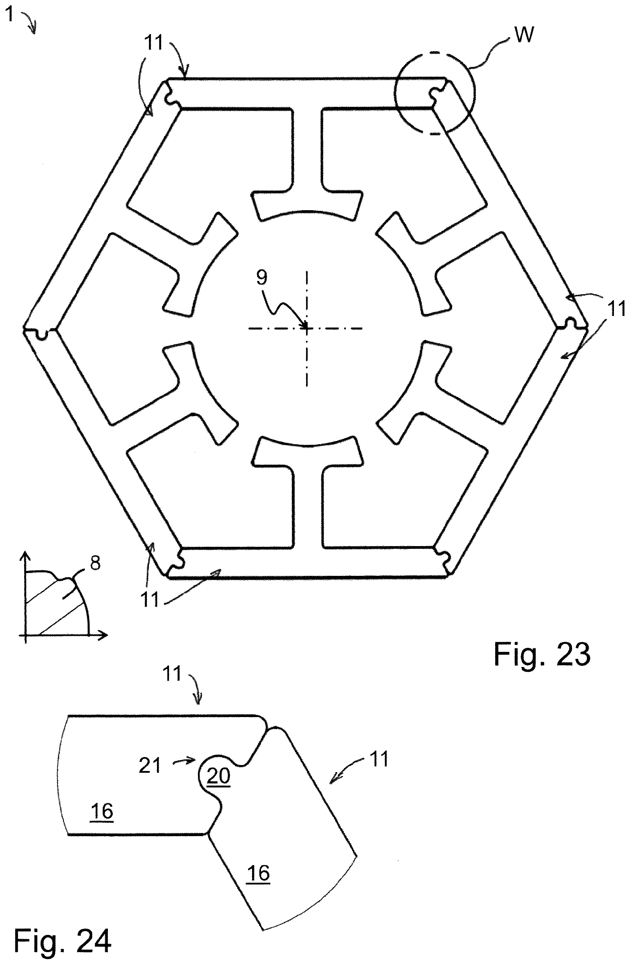

Eine alternative vierte Ausführungsform der Statorbleche der Statorsegmente 11 der Statorbaugruppe 1 geben die Fig. 19 bis 24 an. Im Unterschied zu der dritten Ausführungsform nach den Fig. 13 bis 18 weisen die nasenförmige Ausformung 20 und die Aufnahmenut 21 hier eine zueinander korrespondierende, abgerundete Kontur auf, wobei die Winkel A, B, C, D auch hier näherungsweise 90° betragen, sodass das gleichzeitige und synchrone Fügen der Statorsegmente 11 entlang der radialen Fügebewegung zum Mittelpunkt 9 hin ermöglicht ist.

Die Geometrie der Ausformungen 20 und der Aufnahmenuten 21 ist bezogen auf die senkrecht zu der Axialrichtung 5 definierte Querschnittsebene 8 der Statorbaugruppe 1 derart aufeinander abgestimmt, dass die nasenförmigen Ausformungen 20 auf Übermaß gefertigt sind. Das Übermaß beträgt maximal gut ein zehntel Millimeter und im vorliegenden Fall nominell 0,044 mm. Es ist so bestimmt, dass die Statorbaugruppe 1 im gefügten Zustand eine erhöhte mechanische Stabilität aufweist und selbsthaltend ist.

Zum Fügen der Statorbaugruppe 1 werden die in Umfangsrichtung regelmäßig beabstandet angeordneten Statorsegmente 11 gleichzeitig und synchron radial auf den Mittelpunkt 9 zubewegt, bis die Ausformungen 20 in die Aufnahmenuten 21 eingreifen und die vormals beabstandeten benachbarten Statorsegmente 11 aneinander anliegen zur Bildung der Statorbaugruppe 1. Die Fügekraft ist dabei so bemessen, dass die nasenförmigen Ausformungen 21 unter Nutzung der Fertigungstoleranzen der typischerweise gestanzten Blechteile der Statorbaugruppe 1, der Elastizität und des vorhandenen Spiels in die Aufnahmenuten 21 eingedrückt werden.

Die Statorbleche der sechs identisch ausgebildeten Statorsegmente 11 sind beim Fügen wie gehabt so orientiert, dass zwischen benachbarten Jochabschnitten 16 jeweils ein Winkel F von 120° gebildet ist. Die stirnseitigen Enden der Statorbleche sind dabei jeweils mit einem Winkel E von 60° zu einer Längserstreckungsrichtung der Jochabschnitte 16 orientiert.

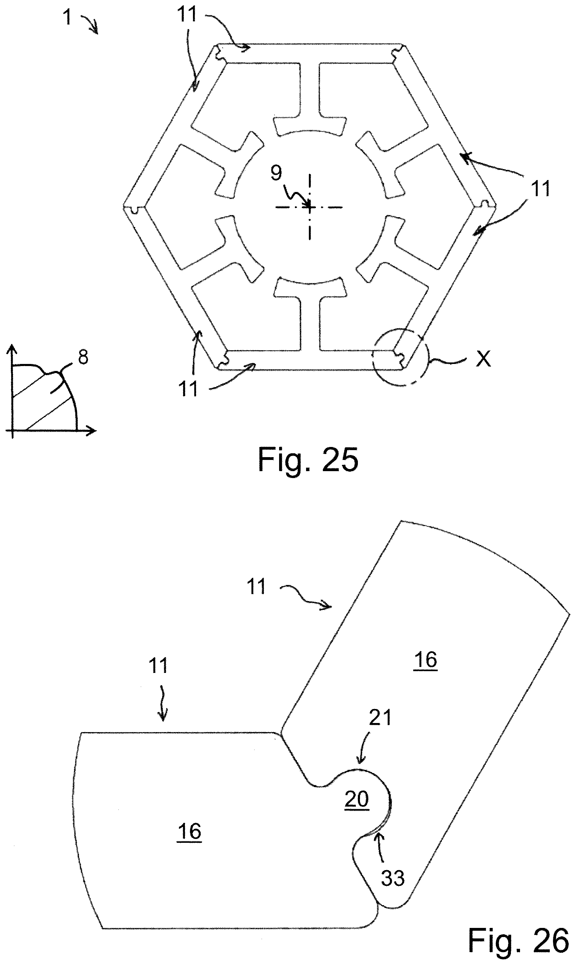

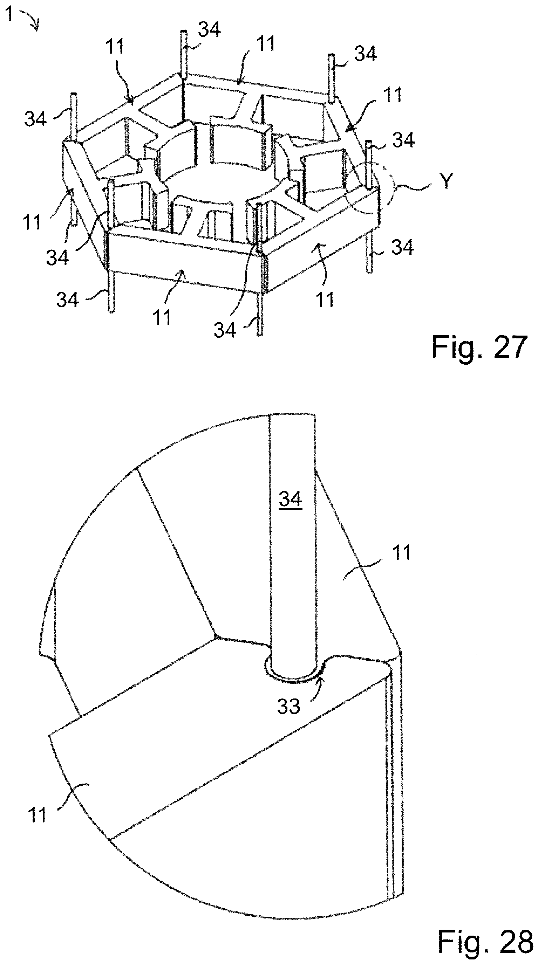

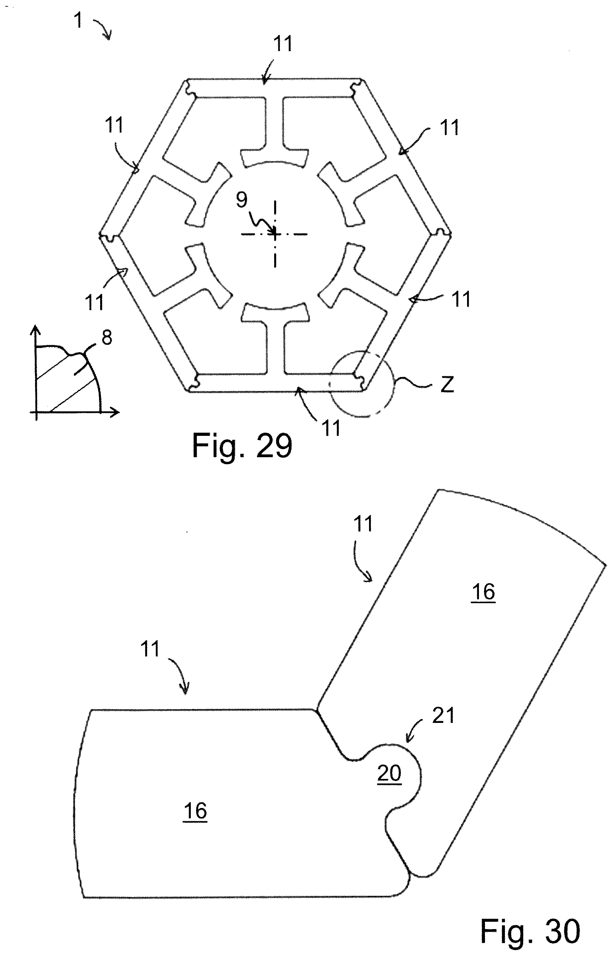

Eine fünfte Ausführungsform der Statorbleche der Statorsegmente 11 der Statorbaugruppe 1 geben die Fig. 25 bis 30 an. Die Statorbleche sind in den Fig. 25 bis 30 bereits gefügt, sodass sie einen sechseckringförmigen Blechstator bilden. Wie Fig. 26 in einer vergrößerten Detailansicht veranschaulicht, besteht hierbei zwischen der nasenförmigen Ausformung 20 und der Aufnahmenut 21 abschnittsweise ein Spalt beziehungsweise Spiel 33, wodurch das kollisionsfreie Fügen der Statorsegmente 11 erleichtert ist.

Um den Formschluss zwischen den Statorsegmenten 11 zu erhöhen, werden die Statorsegmente 11 im Bereich der Verbindungskonturen mit einem Stemmwerkzeug 34 angestemmt. Das Stemmwerkzeug 34 ist hierfür jeweils axial beidseitig an die nasenförmigen Ausformungen 20 der äußeren Statorbleche angesetzt. Durch das Anstemmen wird das Spiel 33 zwischen den nasenförmigen Ausformungen 20 und den ebendiese umgreifenden Aufnahmenuten 21 jedenfalls abschnittsweise in der Axialrichtung 5 beseitigt beziehungsweise reduziert, wodurch der Formschluss beziehungsweise die Hinterschneidung zwischen den Verbindungskonturen verstärkt wird.

Selbstverständlich ist unter Beibehaltung der erfinderischen Idee anstelle eines Anstemmens der Statorbleche in der Axialrichtung 5 auch ein Anstemmen derselben in der Radialrichtung 6 geeignet, um den Formschluss beziehungsweise die Hinterschneidung zwischen den nasenförmigen Ausformungen 20 und den Aufnahmenuten 21 zu verstärken beziehungsweise erstmalig herzustellen.

Das Anstemmen oder eine vergleichbare Fertigungsoperation kann wie in den Fig. 25 bis 30 angedeutet bevorzugt nach dem Fügen, grundsätzlich aber auch vor oder während des Fügens der Statorsegmente 11 erfolgen. Beispielsweise kann der lokale Formschluss beziehungsweise die lokale Hinterschneidung auch durch Körnen verstärkt beziehungsweise hergestellt werden.

Gleiche Bauteile und Bauteilfunktionen sind durch gleiche Bezugszeichen gekennzeichnet.

### Bezugszeichenliste

- 1: Statorbaugruppe
- 2: Rotorbaugruppe
- 3: Motorwelle
- 4: Permanentmagnetrotor
- 5: Axialrichtung
- 6: Radialrichtung
- 7: Umfangsrichtung
- 8: Querschnittsebene
- 9: Mittelpunkt
- 11: Statorsegment
- 12: Spulenkörper
- 13: Wicklung
- 14: Statorzahn
- 15: Polschuh
- 16: Jochabschnitt
- 17: Polwinkel
- 18: Teilungswinkel
- 19: Flanschfläche
- 20: nasenförmige Ausformung
- 21: Aufnahmenut
- 22: Jochbreite
- 23: Zahnbreite
- 24: Öffnungswinkel
- 25: radiales Abstandsmaß
- 26: Außenradius des Ringmagneten
- 27: Außenradius des Blechstators
- 28: Spulenhöhe
- 29: Spulenbreite
- 30: Flanschwandstärke
- 31: Mittenwandstärke
- 32: Luftspaltmaß
- 33: Spiel
- 34: Stemmwerkzeug
- A: Winkel
- B: Winkel
- C: Winkel
- D: Winkel
- E: Winkel
- F: Winkel

## Patentansprüche

1. Dreiphasiger BLDC-Motor umfassend eine Rotorbaugruppe (2) mit einer in eine Axialrichtung (5) längserstreckten Motorwelle (3) und mit einem an der Motorwelle (3) montierten Permanentmagnetrotor (4) mit einem mehr als zweipoligen Permanentmagneten und umfassend eine Statorbaugruppe (1) mit einem Blechstator, mit einer Mehrzahl von Spulenkörpern (12) und mit einer Mehrzahl von Wicklungen (13), die die Spulenkörper (12) umgreifen, wobei der Blechstator segmentiert ausgebildet ist und die Statorbaugruppe (1) eine Mehrzahl von Statorsegmenten (11) vorsieht, welche in eine Umfangsrichtung (7) aneinander angesetzt sind und welche jeweils einen Teil eines Statorjochs und einen Statorzahn (14) mit einem Polschuh (15) bereitstellen, wobei jeder Statorzahn (14) einen der Spulenkörper (12) mit einer Wicklung (13) trägt, wobei jedes Statorsegment (11) in die Axialrichtung (5) gestapelte Statorbleche vorsieht und wobei an jedem Statorsegment (11) eine Verbindungskontur vorgesehen ist, die eingerichtet ist zum formschlüssigen Verbinden benachbarter Statorsegmente (11).

2. Motor nach Anspruch 1, **dadurch gekennzeichnet, dass** die Verbindungskontur eine nasenförmige Ausformung (20) und/oder eine korrespondierend zu der nasenförmigen Ausformung (20) geformte Aufnahmenut (21) für die nasenförmige Ausformung (20) vorsieht.

3. Motor nach Anspruch 1 oder 2, **dadurch gekennzeichnet, dass** jedes Statorsegment (11) zwei Verbindungskonturen vorsieht, welche an zwei einander gegenüberliegenden freien Enden eines Jochabschnitts (16) vorgesehen sind.

4. Motor nach Anspruch 3, **dadurch gekennzeichnet, dass** jedes Statorsegment (11) einmal die nasenförmige Ausformung (20) an einem ersten freien Ende und einmal die Aufnahmenut (21) an einem dem ersten freien Ende gegenüberliegenden zweiten freien Ende des Jochabschnitts (16) vorsieht.

5. Motor nach einem der Ansprüche 2 bis 4, **dadurch gekennzeichnet, dass** eine Geometrie der nasenförmigen Ausformung (20) und der Aufnahmenut (21) bezogen auf eine senkrecht zu der Axialrichtung (5) definierte Querschnittsebene (8) der Statorbaugruppe (1) derart aufeinander abgestimmt ist, dass bei einem gleichzeitigen und synchronen radialen Fügen aller Statorsegmente (11) die nasenförmigen Ausformungen (20) kollisionsfrei in die Aufnahmenuten (21) eingesetzt werden und dass ein radiales Entfernen eines einzelnen Statorsegments (11) aus der gefügten Statorbaugruppe (1) aufgrund einer Hinterschneidung, die die Aufnahmenuten (21) und die hierein eingreifenden nasenförmigen Ausformungen (20) bilden, blockiert ist.

6. Motor nach einem der Ansprüche 2 bis 4, **dadurch gekennzeichnet, dass** eine Geometrie der nasenförmigen Ausformung (20) und der Aufnahmenut (21) bezogen auf eine senkrecht zu der Axialrichtung (5) definierte Querschnittsebene (8) der Statorbaugruppe (1) derart aufeinander abgestimmt ist, dass die nasenförmigen Ausformungen (20) ein Übermaß gegenüber den Aufnahmenuten (20) vorsehen und sich bei einem gleichzeitigen und synchronen radialen Fügen aller Statorsegmente (11) unter Aufbringung einer Montagekraft in die Aufnahmenuten (21) einsetzen lassen und dass ein radiales Entfernen eines einzelnen Statorsegments (11) aus der gefügten Statorbaugruppe (1) aufgrund einer Hinterschneidung, die die Aufnahmenuten (21) und die hierein eingreifenden nasenförmigen Ausformungen (20) bilden, blockiert ist.

7. Motor nach Anspruch 6, **dadurch gekennzeichnet, dass** das Übermaß der nasenförmigen Ausformungen (20) maximal 0,12 mm beträgt und bevorzugt im Bereich von 0,075 mm oder weniger liegt und/oder dass die Montagekraft radial orientiert ist.

8. Motor nach einem der Ansprüche 1 bis 7, **dadurch gekennzeichnet, dass** die Statorbaugruppe (1) sechs in die Umfangsrichtung (7) gleichmäßig verteilt angeordnete Statorsegmente (11) aufweist.

9. Motor nach einem der Ansprüche 1 bis 8, **dadurch gekennzeichnet, dass** die Statorbaugruppe (1) sechs in die Umfangsrichtung (7) gleichmäßig verteilt angeordnete Spulenkörper (12) vorsieht.

10. Motor nach einem der Ansprüche 1 bis 9, **dadurch gekennzeichnet, dass** jeder Spulenkörper (12) eine Wicklung (13) trägt.

11. Motor nach einem der Ansprüche 1 bis 10, **dadurch gekennzeichnet, dass** alle Statorsegmente (11) und/oder alle Statorbleche identisch ausgebildet sind.

12. Verfahren zur Herstellung einer Statorbaugruppe (1) für einen BLDC-Motor nach einem der Ansprüche 1 bis 11, wobei die Statorbaugruppe (1) durch eine Mehrzahl von Statorsegmenten (11) mit wenigstens einem Spulenkörper (12) und wenigstens einer Wicklung (13) je Spulenkörper (12) gebildet wird, umfassend die folgenden Verfahrensschritte:
- die Mehrzahl von Statorsegmenten (11) wird in eine Umfangsrichtung verteilt und in die Umfangsrichtung beabstandet zueinander so positioniert, dass alle Statorsegmente (11) in der senkrecht zu der Axialrichtung (5) definierten Querschnittsebene (8) angeordnet sind, einen gleichen Abstand zu einem Mittelpunkt (9) aufweisen und die Statorzähne (14) auf den Mittelpunkt (9) ausgerichtet sind;
- dann werden alle Statorsegmente (11) gleichzeitig und synchron radial so auf den Mittelpunkt (9) zubewegt, dass benachbarte Statorsegmente (11) im Bereich einander zugewandter Verbindungskonturen kollisionsfrei ineinander eingesetzt werden und aneinander anliegen.

13. Verfahren nach Anspruch 12, **dadurch gekennzeichnet, dass** alle Statorsegmente (11) bei der radialen Fügebewegung in Richtung des Mittelpunkts (9) ihre Ausrichtung und/oder Orientierung zu dem Mittelpunkt (9) beibehalten.

14. Verfahren nach Anspruch 12 oder 13, **dadurch gekennzeichnet, dass** die Statorsegmente (11) zur Ausbildung und/oder Verstärkung eines lokalen Formschlusses im Bereich der Verbindungskonturen jedenfalls abschnittsweise verformt und bevorzugt angestemmt werden.

15. Verfahren nach Anspruch 14, **dadurch gekennzeichnet, dass** die Verformung im Bereich der Verbindungskonturen nach dem Einsetzen der Verbindungskonturen der Statorsegmente (11) ineinander erfolgt.

16. Verwendung eines BLDC-Motors nach einem der Ansprüche 1 bis 11 zum Antreiben einer Fluidpumpe in einem wasserführenden Haushaltsgerät, insbesondere einer Waschmaschine, einer Spülmaschine oder einem Gargerät.
